# EUROPEAN PATENT APPLICATION

(11) **EP 3 399 625 A1**
(43) Date of publication of application: **07.11.2018**
(21) Application number: 18166526.6
(22) Date of filing: 10.04.2018
(51) Int. Cl.: H02K 3/22, H02K 3/24, H02K 9/197

(54) **COOLING OF AN ELECTRICAL MACHINE APPARATUS**

(30) Priority: 02.05.2017 GB 201706939
(71) Applicant: Rolls-Royce plc, London SW1E 6AT (GB); Rolls-Royce Marine AS, 6065 Ulsteinvik (NO)
(72) Inventor: Stieger, Rory, Derby, Derbyshire DE24 8BJ (GB); Rokke, Astrid, Derby, Derbyshire DE24 8BJ (GB)
(74) Representative: Rolls-Royce plc

(57) **Abstract**

Electrical machine apparatus comprising: an elongate electrical conductor comprising a first part defining a first end and a second end, the first part defining a first conduit and a second conduit; a first coolant manifold arranged to provide coolant to the first conduit; and a second coolant manifold arranged to provide coolant to the second conduit.

## Description

### TECHNOLOGICAL FIELD

The present disclosure concerns electrical machine apparatus.

### BACKGROUND

Electrical machines, such as generators and motors, may include a stator, a rotor, a magnet arrangement, and an electrical conductor (often referred to as 'windings'). In some examples, the magnet arrangement may be permanent magnets that are mounted on the rotor and the electrical conductor may be mounted on the stator. Where such an electrical machine operates as a generator, the rotor may be rotated and the moving magnetic field generated by the magnet arrangement induces a current in the electrical conductor to provide an electrical output from the electrical machine. Where such an electrical machine operates as a motor, electricity may be supplied to the electrical conductor to generate a magnetic field that attracts/repels the magnet arrangement and thus causes the rotor to rotate. The electrical conductor may generate thermal energy during operation that may be detrimental to the operation of the electrical machine.

### BRIEF SUMMARY

According to various examples there is provided electrical machine apparatus comprising: an elongate electrical conductor comprising a first part defining a first end and a second end, the first part defining a first conduit and a second conduit; a first coolant manifold arranged to provide coolant to the first conduit; and a second coolant manifold arranged to provide coolant to the second conduit.

The first coolant manifold may be arranged to receive coolant from the first conduit. The second coolant manifold may be arranged to receive coolant from the second conduit.

The first conduit may extend between the first end and the second end of the first part. The first coolant manifold may be arranged to provide coolant to the first conduit at the first end of the first part. The second coolant manifold may be arranged to provide coolant to the second conduit at the second end of the first part.

The first coolant manifold may be arranged to receive coolant from the first conduit at the second end of the first part. The second coolant manifold may be arranged to receive coolant from the second conduit at the first end of the first part.

The first conduit may have a first end and a second end. The first end of the first conduit may be positioned a distance from the first end of the first part. The second end of the first conduit may be positioned a distance from the second end of the first part. The second conduit may have a first end and a second end. The first end of the second conduit may be positioned a distance from the first end of the first part. The second end of the second conduit may be positioned a distance from the second end of the first part.

The first part may include: a first aperture connected to the first end of the first conduit; a second aperture connected to the second end of the first conduit; a third aperture connected to the first end of the second conduit; and a fourth aperture connected to the second end of the second conduit.

The first part may have a longitudinal axis. The first conduit and the second conduit may have a non-overlapping arrangement along the longitudinal axis.

The first conduit may comprise a groove in the first part of the elongate electrical conductor.

The second conduit may comprise a groove in the first part of the elongate electrical conductor.

The first coolant manifold and the second coolant manifold may be arranged to provide a counter flow of coolant through the first conduit and the second conduit during operation.

The elongate electrical conductor may have a coiled arrangement and may comprise a first turn and a second turn.

The elongate electrical conductor may include a second part defining a first end and a second end. The second part may define a third conduit and a fourth conduit.

The first coolant manifold may be arranged to provide coolant to the third conduit. The second coolant manifold may be arranged to provide coolant to the fourth conduit.

The first turn may comprise the first part of the elongate electrical conductor and the second part of the elongate electrical conductor.

The first turn may comprise the first part of the elongate electrical conductor and the second turn may comprise the second part of the elongate electrical conductor.

The first turn and the second turn may be adjacent to one another, and at least a portion of the first conduit and at least a portion of the third conduit may be joined to form a single conduit.

The first turn and the second turn may be adjacent to one another, and at least a portion of the second conduit and at least a portion of the fourth conduit may be joined to form a single conduit.

The first turn and the second turn may be adjacent to one another. The first conduit and the third conduit may not be joined and may form separate conduits. The second conduit and the fourth conduit may not be joined and may form separate conduits.

The electrical machine apparatus may further comprise a casing for housing the elongate electrical conductor. The casing may have a first end and a second end. The casing may define a first port at the first end for supplying coolant to the first coolant manifold, and a second port at the second end for supplying coolant to the second coolant manifold.

The electrical machine apparatus may further comprise a stator. The elongate electrical conductor may be mounted on the stator.

According to various examples there is provided an electrical machine comprising electrical machine apparatus as described in any of the preceding paragraphs.

According to various examples there is provided a gas turbine engine comprising electrical machine apparatus as described in any of the preceding paragraphs.

According to various examples there is provided an aircraft comprising electrical machine apparatus as described in any of the preceding paragraphs.

According to various examples there is provided a watercraft comprising electrical machine apparatus as described in any of the preceding paragraphs.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION

Embodiments will now be described by way of example only, with reference to the Figures, in which:
Fig. 1 illustrates a schematic diagram of electrical machine apparatus according to various examples;
Fig. 2 illustrates a perspective view of an elongate electrical conductor according to various examples;
Fig. 3 illustrates a front view of the elongate electrical conductor illustrated in Fig. 2;
Fig. 4 illustrates a side view of the elongate electrical conductor illustrated in Figs. 2 and 3;
Fig. 5 illustrates a front view of another elongate electrical conductor according to various examples;
Fig. 6 illustrates a cross sectional side view of another electrical machine apparatus according to various examples;
Fig. 7 illustrates a schematic diagram of a gas turbine engine according to various examples;
Fig. 8 illustrates a schematic diagram of an aircraft according to various examples;
Fig. 9 illustrates a schematic diagram of a watercraft according to various examples;
Fig. 10 illustrates a plan view of another elongate electrical conductor according to various examples;
Fig. 11 illustrates a plan view of a further elongate electrical conductor according to various examples; and
Fig. 12 illustrates a plan view of another elongate electrical conductor according to various examples.

### DETAILED DESCRIPTION

In the following description, the terms 'connected' and 'coupled' mean operationally connected and coupled. It should be appreciated that there may be any number of intervening components between the mentioned features, including no intervening components.

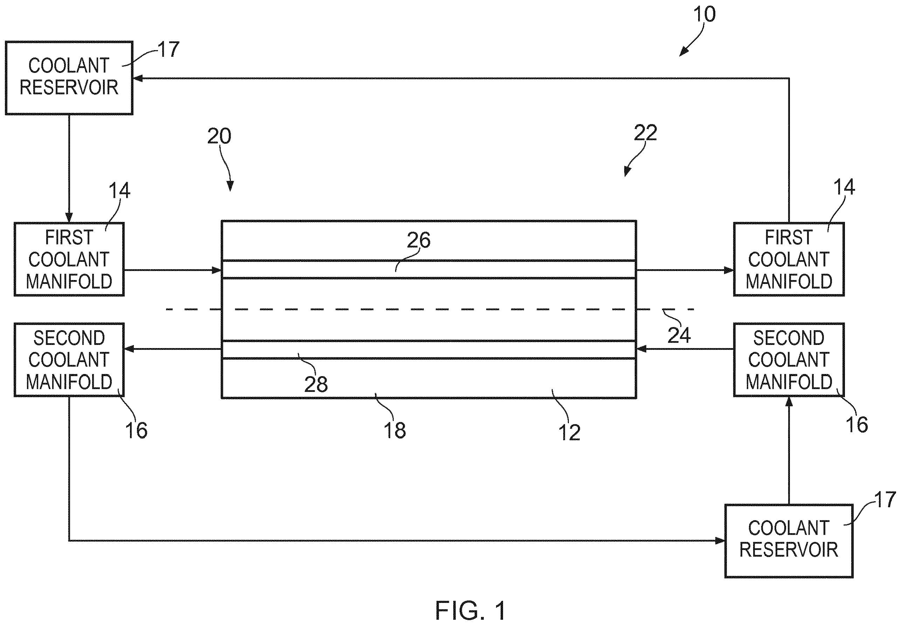

Fig. 1 illustrates a schematic diagram of electrical machine apparatus 10 including an elongate electrical conductor 12, a first coolant manifold 14, and a second coolant manifold 16. In some examples, the electrical machine apparatus 10 may include a coolant reservoir 17. In some examples, the coolant reservoir 17 may be thermally coupled to a fluid stream (for example, an air stream) to remove heat from the coolant reservoir 17.

The electrical machine apparatus 10 may comprise (or be) any electrical machine and may comprise an electrical generator, an electrical motor, or an electrical transformer. The other components of the electrical machine (such as the rotor, the stator, and the magnet arrangement) are not illustrated in Fig. 1 to maintain the clarity of the figure.

In some examples, the electrical machine apparatus 10 may be a module. As used herein, the wording 'module' refers to a device or apparatus where one or more features are included at a later time and, possibly, by another manufacturer or by an end user. For example, where the electrical machine apparatus 10 is a module, the electrical machine apparatus 10 may only include the elongate electrical conductor 12, the first coolant manifold 14, the second coolant manifold 16, and the remaining features of the electrical machine (such as the coolant reservoir 17, the stator, the rotor, and the magnet arrangement for example) may be added by another manufacturer, or by an end user.

The elongate electrical conductor 12 may comprise any suitable material that is electrically conductive, and may comprise a metal such as copper for example. The elongate electrical conductor 12 may have any cross sectional shape, and may have a square cross sectional shape, a rectangular cross sectional shape, a polygonal cross sectional shape, a circular cross sectional shape, or an elliptical cross sectional shape. In some examples, the elongate electrical conductor 12 may comprise metallic foil or may comprise Litz wire.

The elongate electrical conductor 12 includes a first part 18 that defines a first end 20, a second end 22 and extends along a longitudinal axis 24.

The first part 18 defines a first conduit 26 that extends between the first end 20 and the second end 22 of the first part 18. The first conduit 26 may be oriented parallel to the longitudinal axis 24, or may be oriented so that the first conduit 26 defines an angle with the longitudinal axis 24. The first conduit 26 may follow a straight line, a curved line, or a polyline between the first end 20 and the second end 22 of the first part 18. The first conduit 26 may have any suitable structure and may comprise a groove within the first part 18 or may comprise a hole through the first part 18 (that is, the first conduit 26 may be an aperture that is wholly surrounded by the material of the first part 18 between the first end 20 and the second end 22). The first conduit 26 may have any suitable cross sectional shape. For example, the cross sectional shape of the first conduit 26 may be to maximise surface area for heat extraction and to aid mixing or turbulation of the flow to enhance heat transfer. The first conduit 26 may extend all the way to, and through, the first and second ends 20, 22. In other examples, the first conduit 26 may not extend all the way to the first and second ends 20, 22 and may terminate within the length of the first part 18.

The first part 18 also defines a second conduit 28 that extends between the first end 20 and the second end 22 of the first part 18. The second conduit 28 may have the same structure as the first conduit 26, or may have a different structure to the first conduit 26. The second conduit 28 may be oriented parallel to the longitudinal axis 24, or may be oriented so that the second conduit 28 defines an angle with the longitudinal axis 24. The second conduit 28 may follow a straight line, a curved line, or a polyline between the first end 20 and the second end 22 of the first part 18. The second conduit 28 may have any suitable structure and may comprise a groove within the first part 18 or may comprise a hole through the first part 18 (that is, the second conduit 28 may be wholly enclosed by the material of the first part 18 between the first end 20 and the second end 22). The second conduit 28 may have any suitable cross sectional shape. For example, the cross sectional shape of the second conduit 28 may be to maximise surface area for heat extraction and to aid mixing or turbulation of the flow to enhance heat transfer. The second conduit 28 may extend all the way to, and through, the first and second ends 20, 22. In other examples, the second conduit 28 may not extend all the way to the first and second ends 20, 22 and may terminate within the length of the first part 18.

The first coolant manifold 14 is arranged to provide coolant to the first conduit 26 at the first end 20 of the first part 18. The first coolant manifold 14 may also be arranged to receive the coolant from the coolant reservoir 17, receive the coolant from the first conduit 26 at the second end 22 of the first part 18, and may be arranged to return the coolant to the coolant reservoir 17. Where the first conduit 26 terminates within the length of the first part 18, the first coolant manifold 14 may be internal to the first conduit 26 and thus may provide coolant to the first conduit 26 adjacent to the first end 20 of the first part 18. Furthermore, a series of first coolant manifolds 14 may be provided through the length of the first part 18.

The second coolant manifold 16 is arranged to provide coolant to the second conduit 28 at the second end 22 of the first part 18. The second coolant manifold 16 may also be arranged to receive the coolant from the coolant reservoir 17, receive the coolant from the second conduit 28 at the first end 20 of the first part 18, and may be arranged to return the coolant to the coolant reservoir 17. Where the second conduit 28 terminates within the length of the first part 18, the second coolant manifold 16 may be internal to the second conduit 28 and thus may provide coolant to the second conduit 28 adjacent to the second end 22 of the first part 18. Furthermore, a series of second coolant manifolds 16 may be provided through the length of the first part 18.

In operation, the first coolant manifold 14 and the second coolant manifold 16 provide a counter flow of coolant through the first conduit 26 and the second conduit 28. As coolant flows through the first conduit 26 from the first end 20 to the second end 22, thermal energy is transferred from the elongate electrical conductor 12 to the coolant within the first conduit 26 which may cause the coolant to boil. Similarly, as coolant flows through the second conduit 28 from the second end 22 to the first end 20, thermal energy is transferred from the elongate electrical conductor 12 to the coolant within the second conduit 28 which may cause the coolant to boil. The electrical machine apparatus 10 may provide an advantage in that the counter flow of coolant may result in liquid coolant being in contact with the elongate electrical conductor 12 between the first end 20 and the second end 22 of the first part 18. This may increase the transfer of thermal energy from the elongate electrical conductor 12 to the coolant and thus improve the operational performance of the electrical machine apparatus 10.

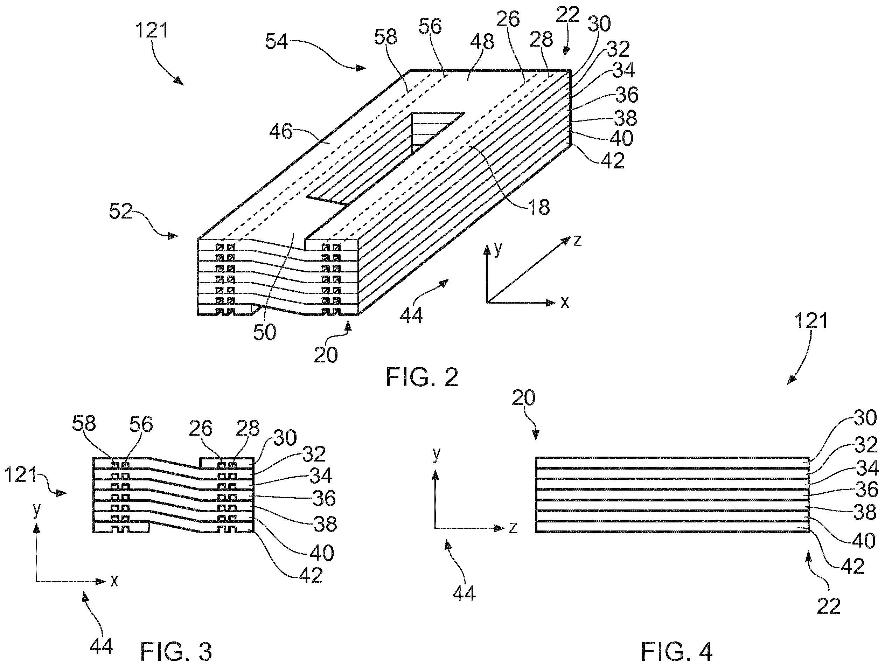

Figs. 2, 3 and 4 illustrate perspective, front, and side views of an elongate electrical conductor 121 according to various examples. The elongate electrical conductor 121 is similar to the elongate electrical conductor 12, and where the features are similar, the same reference numerals are used. The elongate electrical conductor 121 has a coiled arrangement and comprises a first turn 30, a second turn 32, a third turn 34, a fourth turn 36, a fifth turn 38, a sixth turn 40, and a seventh turn 42. It should be appreciated that in other examples, the elongate electrical conductor 121 may comprise fewer than seven turns or may comprise more than seven turns. The turns 30, 32, 34, 36, 38, 40, 42 of the elongate electrical conductor 121 are rectangular in shape, but may have a different shape in other examples. For example, the turns 30, 32, 34, 36, 38, 40, 42 may be square, circular, elliptical or polygonal in shape.

Figs. 2, 3 and 4 also illustrate a Cartesian coordinate system 44 that includes an X axis, a Y axis and a Z axis. The coiled arrangement of the elongate electrical conductor 121 is configured such that the first turn 30, the second turn 32, the third turn 34, the fourth turn 36, the fifth turn 38, the sixth turn 40 and the seventh turn 42 are oriented parallel to the X-Z plane and are positioned sequentially along the Y axis. The first turn 30, the second turn 32, the third turn 34, the fourth turn 36, the fifth turn 38, the sixth turn 40 and the seventh turn 42 have the same structure as one another. In other examples, the structures of the first turn 30, the second turn 32, the third turn 34, the fourth turn 36, the fifth turn 38, the sixth turn 40 and the seventh turn 42 may be different to one another.

The first turn 30 includes a first part 18, a second part 46, a third part 48, and a fourth part 50. The first part 18 extends between a first end 20 and a second end 22 along the Z axis. Similarly, the second part 46 extends between a first end 52 and a second end 54 along the Z axis. The third part 48 extends between the second end 22 of the first part 18 and the second end 54 of the second part 46 along the X axis. The fourth part 50 extends between the first end 52 of the second part 46 and a first end of a first part of the second turn 32 and has a negative gradient (that is, the third part 48 also extends downwards in the -Y direction).

The first part 18 of the first turn 30 includes a first conduit 26 and a second conduit 28 that extend parallel to one another along the Z axis between the first end 20 and the second end 22 of the first part 18. The first and second conduits 26, 28 are grooves defined in a lower surface of the first part 18 and are enclosed along the Z axis by an upper surface of the second turn 32. The second part 46 of the first turn 30 includes a third conduit 56 and a fourth conduit 58 that extend parallel to one another along the Z axis between the first end 52 and the second end 54 of the second part 46. The third and fourth conduits 56, 58 are also grooves defined in a lower surface of the second part 46 and are enclosed along the Z axis by an upper surface of the second turn 32. The third part 48 and the fourth part 50 do not define conduits for the circulation of coolant.

The first conduit 26, the second conduit 28, the third conduit 56, and the fourth conduit 58 have square cross sectional shapes as illustrated in Figs. 2 and 3. In other examples, the first conduit 26, the second conduit 28, the third conduit 56 and the fourth conduit 58 may have any suitable cross sectional shape and may have a polygonal cross sectional shape, a circular cross sectional shape, or an elliptical cross sectional shape. The first conduit 26, and/or the second conduit 28, and/or the third conduit 56, and/or the fourth conduit 58 may have different cross sectional shapes to one another.

The first coolant manifold 14 (illustrated in Fig. 1) is arranged to receive coolant from the coolant reservoir 17 (illustrated in Fig. 1), provide the coolant to the first conduit 26 at the first end 20 of the first part 18, receive the coolant from the first conduit 26 at the second end 22 of the first part 18, and return the coolant to the coolant reservoir 17. Additionally, the first coolant manifold 14 is arranged to provide the coolant to the third conduit 56 at the first end 52 of the second part 46, and receive the coolant from the third conduit 56 at the second end 54 of the second part 46.

The second coolant manifold 16 (illustrated in Fig. 1) is arranged to receive coolant from the coolant reservoir 17 (illustrated in Fig. 1), provide the coolant to the second conduit 28 at the second end 22 of the first part 18, receive the coolant from the second conduit 28 at the first end 20 of the first part 18, and return the coolant to the coolant reservoir 17. Additionally, the second coolant manifold 16 is arranged to provide the coolant to the fourth conduit 58 at the second end 52 of the second part 46, and receive the coolant from the fourth conduit 58 at the first end 52 of the second part 46.

As mentioned above, the second turn 32, the third turn 34, the fourth turn 36, the fifth turn 38, the sixth turn 40 and the seventh turn 42 have the same structure as the first turn 30. Consequently, the second turn 32, the third turn 34, the fourth turn 36, the fifth turn 38, the sixth turn 40 and the seventh turn 42 also define first conduits 26, second conduits 28, third conduits 56 and fourth conduits 58 as described above.

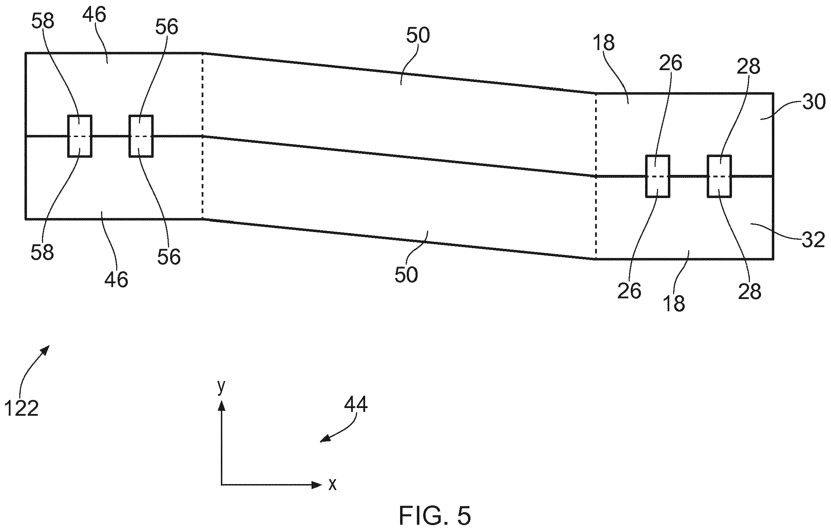

Fig. 5 illustrates a front view of another elongate electrical conductor 122 according to various examples. The elongate electrical conductor 122 is similar to the elongate electrical conductor 121 illustrated in Figs. 2, 3 and 4, and where the features are similar, the same reference numerals are used. Fig. 5 also illustrates the Cartesian coordinate system 44.

The elongate electrical conductor 122 includes a first turn 30 and a second turn 32. The first, second, third and fourth conduits 26, 28, 56, 58 of the first turn 30 are grooves defined by the lower surface of the first turn 30. The first, second, third and fourth conduits 26, 28, 56, 58 of the second turn 32 are grooves defined by the upper surface of the second turn 32. The first, second, third and fourth conduits 26, 28, 56, 58 of the first turn 30 are aligned along the X axis with the first, second, third and fourth conduits 26, 28, 56, 58 of the second turn 32 respectively. Consequently, the first conduits 26 of the first and second turns 30, 32 are joined and form a single conduit, the second conduits 28 of the first and second turns 30, 32 are joined and form a single conduit, the third conduits 56 of the first and second turns 30, 32 are joined and form a single conduit, and the fourth conduits 58 of the first and second turns 30, 32 are joined and form a single conduit. In other examples, the first, second, third and fourth conduits 26, 28, 56, 58 of the first turn 30 may not be aligned along the X axis with the first, second, third and fourth conduits 26, 28, 56, 58 of the second turn 32 respectively.

The elongate electrical conductor 122 may be advantageous in that since the first, second, third and fourth conduits 26, 28, 56, 58 of adjacent turns are joined to one another, the resultant joined conduits have an increased cross sectional area and volume (relative to a conduit in just one turn). This may prevent coolant within the conduits from completely boiling and drying out and may hence increase the transfer of thermal energy from the elongate electrical conductor 122 to the coolant.

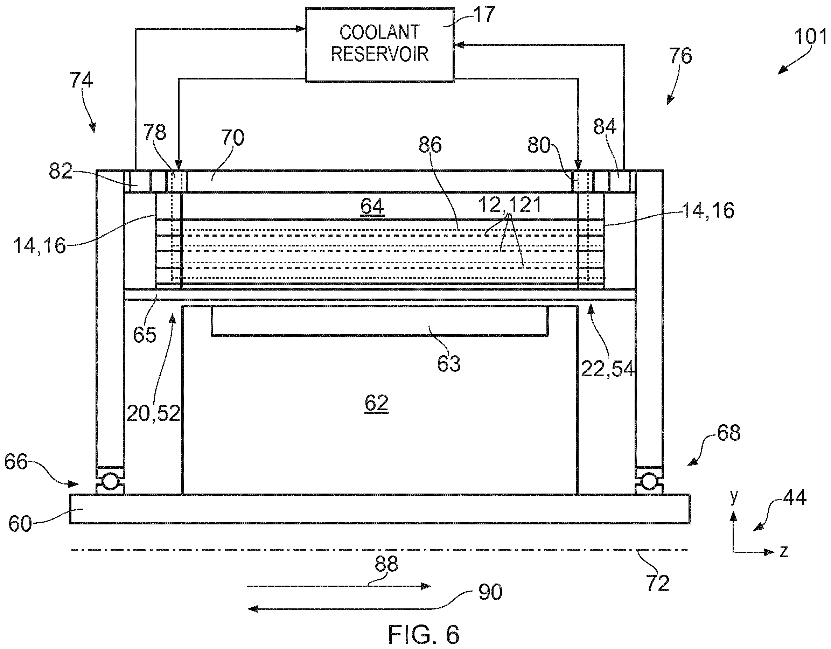

Fig. 6 illustrates a cross sectional side view of another electrical machine apparatus 101 according to various examples. The electrical machine apparatus 101 is similar to the electrical machine apparatus 10 and where the features are similar, the same reference numerals are used. Fig. 6 also illustrates the Cartesian coordinate system 44.

The electrical machine apparatus 101 includes a shaft 60, a rotor 62, a magnet arrangement 63 mounted on the rotor 62, a stator 64, an elongate electrical conductor 12, 121, a stator liner 65, a first bearing 66, a second bearing 68, a casing 70, a first coolant manifold 14, and a second coolant manifold 16.

The shaft 60 is arranged to rotate about an axis 72 that is oriented parallel to the Z axis. The rotor 62 and the magnet arrangement 63 are mounted on the shaft 60 and are thus also arranged to rotate about the axis 72. The magnet arrangement 63 may be an arrangement of permanent magnets, or may be an elongate electrical conductor that is configured to function as an electromagnet.

The casing 70 is mounted on the shaft 60 by the first bearing 66 and the second bearing 68 and is thus static relative to the shaft 60. The casing 70 has a first end 74 and a second end 76 that are spaced apart along the Z axis. The casing 70 defines a first port 78 at the first end 74 for supplying coolant to the first coolant manifold 16, a second port 80 at the second end 76 for supplying coolant to the second coolant manifold 16, a third port 82 at the first end 74 for receiving coolant from the second coolant manifold 16, and a fourth port 84 at the second end 78 for receiving coolant from the first coolant manifold 14. The coolant reservoir 17 is coupled to the first port 78, the second port 80, the third port 82 and the fourth port 84 to supply and receive coolant from the first and second coolant manifolds 14, 16.

The stator 64 is mounted on the casing 70 and is consequently static relative to the shaft 60, the rotor 62 and the magnet arrangement 63. The stator 64 comprises a plurality of stator teeth 86 on which the elongate electrical conductor 12, 121 is mounted.

The elongate electrical conductor 12, 121 may have the same structure as the elongate electrical conductors illustrated in Figs. 1 to 5. The first end 20 of the first part 18 is positioned adjacent to the first end 74 of the casing 70, and the second end 22 of the first part 18 is positioned adjacent to the second end 76 of the casing 70. The first end 52 of the second part 46 is positioned adjacent to the first end 74 of the casing 70, and the second end 54 of the second part 46 is positioned adjacent to the second end 76 of the casing 70. Consequently, the first conduits 26, the second conduits 28, the third conduits 56, and the fourth conduits 58 extend parallel to the axis 72 and to the Z axis and are coupled to the first coolant manifold 14, and the second coolant manifold 16 as described in the preceding paragraphs. The first conduits 26, the second conduits 28, the third conduits 56, and the fourth conduits 58 are not illustrated in Fig. 6 to maintain the clarity of the figure.

The stator liner 65 is mounted on the casing 70 at the first end 74 and at the second end 76 of the casing 70. The stator liner 65 is positioned between the rotor 62 and the stator 64 and is arranged to prevent coolant from flowing onto the rotor 62 and magnet arrangement 63.

In operation, coolant is supplied from the coolant reservoir 17 to the first coolant manifold 14 via the first port 78. The coolant flows from the first coolant manifold 14 and into the first conduits 26 and the third conduits 56 at the first ends 20, 52. The coolant flows through the first conduits 26 and the third conduits 56 in the +Z direction (as indicated by arrow 88) and flows into the first coolant manifold 14 at the second ends 22, 54. The coolant may then flow to the coolant reservoir 17 via the fourth port 84.

Coolant is also supplied from the coolant reservoir 17 to the second coolant manifold 16 via the second port 80. The coolant flows from the second coolant manifold 16 and into the second conduits 28 and the fourth conduits 58 at the second ends 22, 54. The coolant flows through the second conduits 28 and the fourth conduits 58 in the -Z direction (as indicated by arrow 90) and flows into the second coolant manifold 16 at the first ends 20, 52. The coolant may then flow to the coolant reservoir 17 via the third port 82.

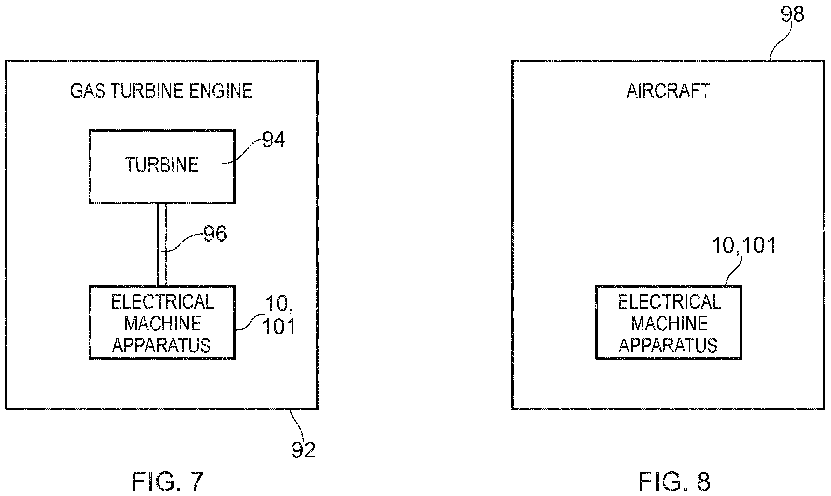

Fig. 7 illustrates a schematic diagram of a gas turbine engine 92 according to various examples. The gas turbine engine 92 comprises a turbine 94, a shaft 96 (which may be the same as the shaft 60 illustrated in Fig. 6) and the electrical machine apparatus 10, 101. The rotor 62 of the electrical machine apparatus 10, 101 is coupled to the turbine 94 via the shaft 96.

In operation, the electrical machine apparatus 10, 101 is configured to operate as a generator. In more detail, the turbine 94 rotates during operation and provides torque to the rotor 62 of the electrical machine apparatus 10, 101 via the shaft 96. The rotation of the rotor 62 and the magnet arrangement 63 induces an electrical current in the electrical conductor 12, 121. In other examples, the electrical machine apparatus 10, 101 may be configured to operate as a motor that may drive the turbine 94 and thus rotate a fan coupled to the turbine 94.

Fig. 8 illustrates a schematic diagram of an aircraft 98 comprising the electrical machine apparatus 10, 101. The electrical machine apparatus 10, 101 may be coupled to an engine (such as a gas turbine engine or an internal combustion engine) and be operable as a generator for generating electricity. In other examples, the electrical machine apparatus 10, 101 may be coupled to a fan and may function as a motor for providing torque to the fan.

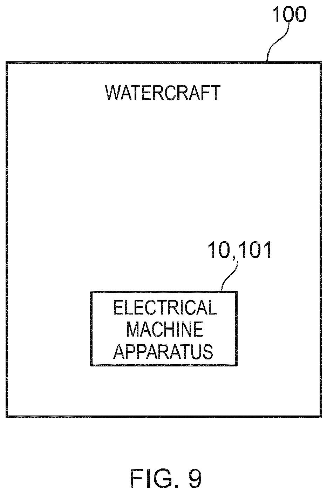

Fig. 9 illustrates a schematic diagram of a watercraft 100 comprising the electrical machine apparatus 10, 101. The electrical machine apparatus 10, 101 may be coupled to an engine (such as a gas turbine engine, an internal combustion engine, or a nuclear power plant) and be operable as a generator for generating electricity. In other examples, the electrical machine apparatus 10, 101 may be coupled to a propulsor (such as an azimuth thruster or a propeller) and may function as a motor for providing torque to the propulsor.

It will be understood that the invention is not limited to the embodiments above-described and various modifications and improvements can be made without departing from the concepts described herein. For example, one or more of the first, second, third, fourth, fifth, sixth and seventh turns 30, 32, 34, 36, 38, 40, 42 may not comprise the first and second conduits 26, 28 and/or the third and fourth conduits 56, 58. Where the bottom turn (such as the seventh turn 42 illustrated in Figs. 2 and 3) does not comprise the conduits 26, 28, the bottom turn may act as a seal to the first and second coolant manifolds 14, 16.

In some examples, the third part 48 and the fourth part 50 may define conduits for the circulation of coolant.

The above described examples may also be used in an electrical machine having an inner stator and an outer rotor.

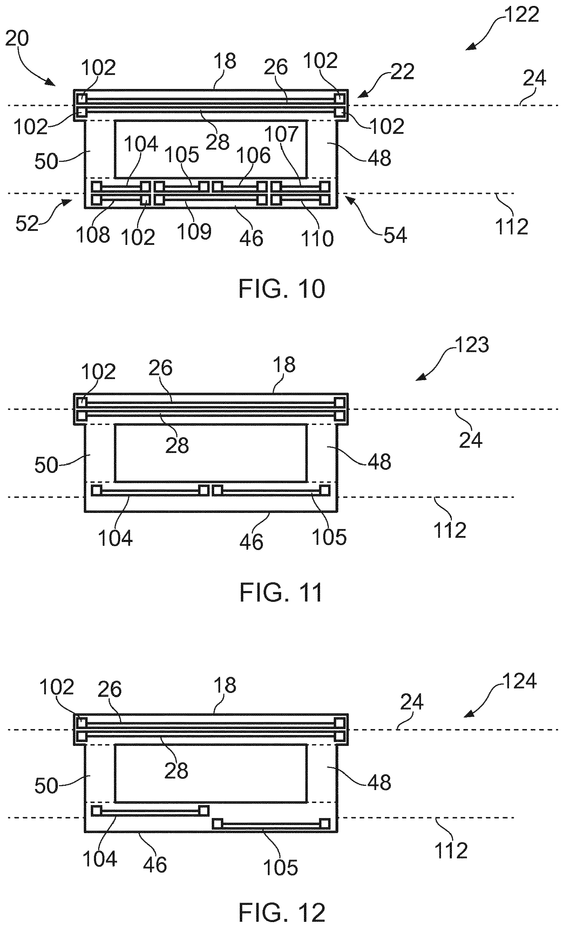

Fig. 10 illustrates a plan view of another elongate electrical conductor 122 according to various examples. The elongate electrical conductor 122 is similar to the elongate electrical conductor 121 and where the features are similar, the same reference numerals are used. The conduits of the elongate electrical conductor 122 do not extend all the way to the first and second ends 20, 22, 52, 54 and thus terminate within the length of the first part 18 and the second part 46. The elongate electrical conductor 122 includes a plurality of radially extending apertures (illustrated as blocks 102 in Fig. 10) that couple the conduits to the coolant manifolds.

In more detail, the first part 18 includes a first conduit 26 and a second conduit 28. The first conduit 26 has a first end that is positioned a (non-zero) distance from the first end 20 of the first part 18, and a second end that is positioned a (non-zero) distance from the second end 22 of the first part 18. Similarly, the second conduit 28 has a first end that is positioned a (non-zero) distance from the first end 20 of the first part 18, and a second end that is positioned a (non-zero) distance from the second end 22 of the first part 18.

The second part 46 includes a third conduit 104, a fourth conduit 105, a fifth conduit 106, a sixth conduit 107, a seventh conduit 108, an eighth conduit 109 and a ninth conduit 110 that terminate within the length of the second part 46. The third conduit 104, the fourth conduit 105, the fifth conduit 106, and the sixth conduit 107 extend parallel to a longitudinal axis 112 of the second part 46 and are arranged successively in a row. The seventh conduit 108, the eighth conduit 109 and the ninth conduit 110 also extend parallel to the longitudinal axis 112 and are arranged successively in a row alongside the third conduit 104, the fourth conduit 105, the fifth conduit 106, and the sixth conduit 107.

Fig. 11 illustrates a plan view of a further elongate electrical conductor 123 according to various examples. The elongate electrical conductor 123 is similar to the elongate electrical conductor 122 and where the features are similar, the same reference numerals are used.

The elongate electrical conductor 123 differs from the elongate electrical conductor 122 in that the second part 46 includes a third conduit 104 and a fourth conduit 105 that are arranged successively along a common path. The third conduit 104 and the fourth conduit 105 do not overlap one another along the longitudinal axis 112.

Fig. 12 illustrates a plan view of another elongate electrical conductor 124 according to various examples. The elongate electrical conductor 124 is similar to the elongate electrical conductors 122 and 123, and where the features are similar, the same reference numerals are used.

The elongate electrical conductor 124 differs from the elongate electrical conductor 123 in that the third conduit 104 and the fourth conduit 105 are not arranged along a common path. In more detail, the third conduit 104 and the fourth conduit 105 are arranged successively and do not overlap one another along the longitudinal axis 112. In other examples, the third conduit 104 and the fourth conduit 105 may partially overlap one another.

The electrical machine apparatus 10, 101 may comprise any of the elongate electrical conductors 122, 123 or 124 illustrated in Figs. 10, 11 and 12, or may comprise an elongate electrical conductor having any of the conduit arrangements illustrated in Figs. 10, 11 and 12. For example, both the first part 18 and the second part 46 of such an elongate electrical conductor may have the conduit arrangement of the second parts 46 illustrated in Figs. 10, 11 and 12.

Except where mutually exclusive, any of the features may be employed separately or in combination with any other features and the disclosure extends to and includes all combinations and sub-combinations of one or more features described herein.

## Claims

1. Electrical machine apparatus comprising:
an elongate electrical conductor comprising a first part defining a first end and a second end, the first part defining a first conduit and a second conduit;
a first coolant manifold arranged to provide coolant to the first conduit; and
a second coolant manifold arranged to provide coolant to the second conduit.

2. Electrical machine apparatus as claimed in claim 1, wherein the first coolant manifold is arranged to receive coolant from the first conduit, and the second coolant manifold is arranged to receive coolant from the second conduit.

3. Electrical machine apparatus as claimed in claim 1 or 2, wherein the first conduit extends between the first end and the second end of the first part, the first coolant manifold being arranged to provide coolant to the first conduit at the first end of the first part, and the second coolant manifold being arranged to provide coolant to the second conduit at the second end of the first part.

4. Electrical machine apparatus as claimed in claim 3, wherein the first coolant manifold is arranged to receive coolant from the first conduit at the second end of the first part, and the second coolant manifold is arranged to receive coolant from the second conduit at the first end of the first part.

5. Electrical machine apparatus as claimed in claim 1 or 2, wherein the first conduit has a first end and a second end, the first end of the first conduit being positioned a distance from the first end of the first part, the second end of the first conduit being positioned a distance from the second end of the first part, and wherein the second conduit has a first end and a second end, the first end of the second conduit being positioned a distance from the first end of the first part, and the second end of the second conduit being positioned a distance from the second end of the first part.

6. Electrical machine apparatus as claimed in any of the preceding claims, wherein the first coolant manifold and the second coolant manifold are arranged to provide a counter flow of coolant through the first conduit and the second conduit during operation.

7. Electrical machine apparatus as claimed in any of the preceding claims, wherein the elongate electrical conductor has a coiled arrangement and comprises a first turn and a second turn.

8. Electrical machine apparatus as claimed in claim 7, wherein the elongate electrical conductor includes a second part defining a first end and a second end, the second part defining a third conduit and a fourth conduit.

9. Electrical machine apparatus as claimed in claim 8, wherein the first coolant manifold is arranged to provide coolant to the third conduit, and the second coolant manifold is arranged to provide coolant to the fourth conduit.

10. Electrical machine apparatus as claimed in claim 8 or 9, wherein the first turn comprises the first part of the elongate electrical conductor and the second part of the elongate electrical conductor.

11. Electrical machine apparatus as claimed in claim 8 or 9, wherein the first turn comprises the first part of the elongate electrical conductor and the second turn comprises the second part of the elongate electrical conductor.

12. Electrical machine apparatus as claimed in claim 9, wherein the first turn and the second turn are adjacent to one another, and at least a portion of the first conduit and at least a portion of the third conduit are joined to form a single conduit.

13. Electrical machine apparatus as claimed in claim 11 or 12, wherein the first turn and the second turn are adjacent to one another, and at least a portion of the second conduit and at least a portion of the fourth conduit are joined to form a single conduit.

14. Electrical machine apparatus as claimed in claim 11, wherein the first turn and the second turn are adjacent to one another, the first conduit and the third conduit are not joined and form separate conduits, the second conduit and the fourth conduit are not joined and form separate conduits.

15. An electrical machine comprising electrical machine apparatus as claimed in claim 1.
